# NEUE EUROPÄISCHE PATENTSCHRIFT

(11) **EP 3 540 884 B2**
(45) Veröffentlichungstag und Bekanntmachung des Hinweises auf die Entscheidung über den Einspruch: **15.10.2025**
(45) Hinweis auf die Patenterteilung: 24.11.2021
(21) Anmeldenummer: 19160771.2
(22) Anmeldetag: 05.03.2019
(51) Int. Cl.: H02G 3/12, H02G 3/08

(54) **INSTALLATIONSDOSE UND EINFÜHRÖFFNUNG FÜR INSTALLATIONSDOSE**
INSTALLATION BOX AND INLET FOR INSTALLATION BOX
BOÎTE D'INSTALLATION ET ENTRÉE DE BOÎTE D'INSTALLATION

(30) Priorität: 14.03.2018 DE 102018105945
(43) Veröffentlichungstag der Anmeldung: 18.09.2019
(60) Teilanmeldung: 21209390.0
(73) Patentinhaber: Kaiser GmbH & Co. KG, 58579 Schalksmühle (DE)
(72) Erfinder: VIOLA, Marc, 58339 Breckerfeld (DE); RÜTHER, Andreas, 58511 Lüdenscheid (DE)
(74) Vertreter: Rentsch Partner AG

(56) Entgegenhaltungen:
- EP-A1- 3 125 384
- EP-A2- 1 722 453
- EP-A2- 2 360 800
- DE-A1- 102005 032 896
- DE-A1- 19 815 950
- DE-U1- 202015 102 105
- US-A- 5 043 536
- US-A1- 2005 092 506
- ANONYMOUS: "Modulus ® Empfehlungen für den Konstrukteur ", ALLIEDSIGNAL PLASTICS, 1 January 1996 (1996-01-01), XP055953929
- ANONYMOUS: "VDE Prüf- und Zertifizierungsinstitut Zeichengenehmigung", VDE, 12 October 2010 (2010-10-12), XP055953941, [retrieved on 20220823]

## Beschreibung

### TECHNISCHES GEBIET

Die Erfindung betrifft eine Installationsdose für elektrotechnische Zwecke, insbesondere zur Aufnahme von elektrischen Teilen wie Schaltern, Steckdosen, Lampen oder ähnliches.

### HINTERGRUND DER ERFINDUNG

Um elektrische Schalter, Steckdosen, Lampen, Apparate, etc. an den dazu vorgesehenen Stellen in einem Gebäude eines Bauwerkes anbringen zu können, werden unter anderem Installationsdosen verwendet. Unter solchen Installationsdosen werden beispielsweise Unterputzdosen, Einlasskästen, Unterputzabzweigdosen, Verteilerdosen und dergleichen verstanden. Die Installationsdosen weisen typischerweise einen zylinder- oder quaderförmigen Körper mit einem Dosenboden und einer daran anschliessenden Dosenwand auf und umfassen einen über eine Installationsöffnung zugänglichen Installationsraum. Umfangsseitig in der Dosenwand und/oder dem Dosenboden, bzw. in einem Übergangsbereich zwischen Dosenboden und Dosenwand weist der Dosenkörper zudem mehrere Einführöffnungen auf, welche in der Regel durch einen Wandbereich zunächst verschlossen sind. Bei Bedarf können die Einführöffnungen mit einem Werkzeug herausgetrennt werden, um ein Elektrorohr, bzw. ein Elektrokabel in den Installationsraum einzuführen. Nachfolgend werden einige Dokumente aus dem Stand der Technik kurz erläutert:
WO9614682A1, publiziert am 17.05.1996 im Namen von G. Putz, offenbart eine Hohlwanddose in dessen Wand und Boden Schlitze vorgesehen sind. Die von diesen begrenzten Bereiche der Wand bzw. des Bodens sind über Sollbruchstellen mit den restlichen Abschnitten der Wand bzw. des Bodens verbunden, so dass in einfacher Weise Einführungsdurchbrüche für Kabel gebildet werden können.
EP2360800B1, publiziert am 26.07.2017 im Namen der Anmelderin, betrifft ein Installationsteil für elektrische Installationen zum Einführen mindestens eines Leerrohres, wobei das Installationsteil mindestens eine Wandung mit mindestens einem durch eine Sollbruchstelle umgrenzten Wandungsbereich aufweist. Durch Heraustrennen des Wandungsbereiches wird ein Einlass für ein Leerrohr gebildet, wobei der Wandungsbereich mindestens eine Eingriffskontur für ein Werkzeug, insbesondere die Klinge eines Schraubendrehers, zum Ausbrechen des Wandungsbereiches aufweist.
US2005072590AA, publiziert am 07.04.2005 in Namen von Thomas and Betts Int LLC, offenbart eine Steckdoseninstallationsdose. An einer Wand der Dose sind kreisförmige innere, mittlere und äußere Nuten angeordnet, welche geschwächte Bereiche zum Entfernen von kleinen, mittleren und großen Vorprägungen bereitstellen. EP3125384A1 und DE202015102105U1 zeigen weitere Beispiele für Installationsdosen mit Einführöffnungen. US5043536A, US2005/092506A1 und DE102005032896A1 zeigen unterschiedliche Konfigurationen von Einführöffnungen mit durchstossbaren Wänden, die an Rohre mit verschiedenen Durchmessern angepasst werden können.

Die aus dem Stand der Technik bekannten Installationsdosen haben den Nachteil, dass die Einführöffnungen häufig schwer zu öffnen sind, bzw. die sie verschliessenden Wandbereiche unkontrolliert ausbrechen. Daher ist ein präzises Öffnen der gewünschten Einführöffnung oftmals nicht möglich. Ein weiterer Nachteil besteht darin, dass die aus dem Stand der Technik bekannten Dosen entlang der Einführöffnungen häufig scharfe Kanten aufweisen.

### DARSTELLUNG DER ERFINDUNG

Eine Aufgabe der Erfindung besteht darin eine verbesserte Installationsdose für den Trockenbau mit einer präzise heraustrennbaren Einführöffnung bereitzustellen, welche sich zudem für unterschiedliche Rohrdurchmesser eignet.

Eine Installationsdose gemäss der Erfindung umfasst einen Dosenboden und eine daran anschliessende Dosenwand, welche einen Installationsraum für elektrotechnische Zwecke bilden. Zwischen dem Dosenboden und der Dosenwand umfasst die Installationsdose einen abgerundeten und/oder abgeflachten Übergangsbereich.

Dem Dosenboden gegenüberliegend befindet sich eine Installationsöffnung welche Zugang zum Installationsraum gestattet. Die Installationsdose weist im Bereich des Dosenbodens und der Dosenwand und des Übergangsbereichs mindestens eine Einführöffnung auf, welche vor der Installation von einem heraustrennbaren Wandbereich verschlossen ist.

Der heraustrennbare Wandbereich ist gegenüber einem Rand der Einführöffnung zumindest bereichsweise durch einen Spalt getrennt, in welchem mindestens ein Sollbruchelement angeordnet ist. Das Sollbruchelement dient zur Halterung des heraustrennbaren Wandbereiches gegenüber dem Rand der Einführöffnung. Der Spalt kann bei Bedarf durch eine dünne Materialschicht verschlossen sein, so dass die Dose vor dem Öffnen z.B. dicht ist. Die dünne Materialschicht kann Teil des Sollbruchelementes sein.

Der heraustrennbare Wandbereich umfasst eine innere Sektion und mindestens eine diese umfangseitig zumindest teilweise umgebende äussere Sektion. Gemäss der Erfindung ist die äussere Sektion von der inneren Sektion ebenfalls durch einen Spalt getrennt, welcher mindestens ein Sollbruchelement umfasst. Die innere und die äussere Sektion sind so ausgestaltet, bzw. angeordnet, dass abhängig vom Durchmesser eines einzuführenden Rohres, die innere Sektion alleine (kleinere Rohrdurchmesser) oder in Kombination mit der äusseren Sektion (grössere Rohrdurchmesser) heraustrennbar ist. Die Sollbruchelemente sind dabei mit Vorteil so ausgestaltet, dass bei einer Krafteinwirkung auf die innere Sektion die weiter innen liegenden Sollbruchelemente, bzw. das mindestens eine Sollbruchelement eines weiter innen liegenden Spaltes, bevorzugter brechen als die weiter aussenliegenden Sollbruchelemente. Dies kann z.B. durch deren Dimensionierung und/oder Anzahl beeinflusst werden. Die Installationsdose wird mit Vorteil durch Spritzgiessen hergestellt. Dabei ist es von Vorteil, wenn die Sollbruchelemente seitlich versetzt zueinander angeordnet sind, da dadurch ein besserer Materialfluss, bzw. eine bessere Materialverteilung bei der Herstellung erreicht wird. Sich nachteilhaft auswirkende Kaltschweissstellen innerhalb des Materials können dadurch vermieden werden.

Je nach Ausgestaltung kann die äussere Sektion selber aus mehreren (äusseren) Sektionen bestehen. Diese äusseren Sektionen sind ebenfalls durch Spalte voneinander getrennt und über mindestens ein darin angeordnetes Sollbruchelement vor dem Öffnen wirkverbunden. Die Sektionen können unterschiedlich ausgestaltet sein. In einer bevorzugten Variante sind sie konzentrisch zueinander angeordnet. Durch das Heraustrennen einer oder mehrerer Sektionen können Öffnungen in den Installationsraum geschaffen werden, welche sich für unterschiedliche Rohrdurchmesser eignen. Die einzelnen (äusseren) Sektionen können z.B. ringförmig, bzw. sichelförmig aneinander angrenzend ausgestaltet sein. Der heraustrennbare Wandbereich, bzw. dessen innere und mindestens eine äussere Sektion können in zwei Raumrichtungen gekrümmt ausgestaltet sein.

Mit Vorteil sind die, mit Bezug auf ein Zentrum der Einführöffnung, in weiter aussenliegenden Spalten angeordneten Sollbruchelemente stärker dimensioniert, bzw. näher beieinander liegend angeordnet, so dass zum Entfernen der weiter innenliegenden Sektionen weniger Kraft aufgewendet werden muss, als bei den weiter aussenliegenden Sektionen. Eine solche Anordnung ist vorteilhaft, da dies das stückweise und kontrollierte Heraustrennen der jeweiligen Sektionen erleichtert. Einerseits wird das ungewollte Heraustrennen einer weiter äusseren Sektion, d.h. das Erzeugen einer möglicherweise zu grossen Öffnung für das einzuführende Kabel oder Elektrorohr, vermieden. Andererseits kann eine erzeugte kleinere Öffnung, welche beispielsweise durch das Heraustrennen der inneren Sektion erzeugt wurde, dahingehend genutzt werden, dass die erzeugte Öffnung als Öffnungshilfe, bzw. Eingriffskontur in den Installationsraum dient: Nach dem Heraustrennen der inneren Sektion, d.h. in einem herausgetrennten Zustand der inneren Sektion, kann in die an der Stelle der inneren Sektion erzeugte Eingriffskontur ein Werkzeug, insbesondere die Klinge eines Schraubendrehers, eingeführt werden. Das eingeführte Werkzeug kann dann folgend dazu genutzt werden, dass die um die innere Sektion herumliegenden äusseren Sektionen und somit der gesamte oder teilweise Wandbereich durch entsprechendes Heraushebeln mit dem Werkzeug einfacher herausgetrennt werden kann.

Ein kontrollierteres Heraustrennen wird weiter unterstützt, indem der die innere und die äussere Sektion umgebende Spalt zumindest bereichsweise als ein Durchbruch von einer Doseninnenseite zu einer Dosenaussenseite ausgestaltet ist. Je nach Ausgestaltung dieser Durchbrüche in dem jeweiligen Spalt, kann das darin angeordnete, mindestens eine Sollbruchelement ein den Durchbruch überbrückender Steg bzw. eine entsprechende Dünnstelle sein.

Um das Heraustrennen der inneren Sektion zu erleichtern kann diese bezogen auf eine Aussenseite der Installationsdose versenkt angeordnet sein. Dies ist besonders vorteilhaft, wenn die innere Sektion bezogen auf ihre Fläche verhältnismässig klein im Vergleich zu der mindestens einen äusseren Sektion ausgestaltet ist. Die innere Sektion kann beispielsweise eine Fläche von lediglich A=5-1 5% der Fläche der mindestens einen äusseren Sektion einnehmen.

Die Installationsdose ist in einem Spritzgussverfahren hergestellt und diese Dose weist ebenfalls Durchbrüche wie oben beschrieben auf, wobei sich die Durchbrüche in eine Entformungsrichtung des Spitzgusswerkzeuges durch die Installationsdose erstrecken. Auf diese Weise werden Hinterschnitte in dem Spritzgussteil vermieden. Weiterhin sind die innere und mindestens eine äussere Sektion mit Vorteil quer zu einer Entformungsrichtung des zur Herstellung der Installationsdose verwendeten Spritzgiesswerkzeuges versetzt zueinander angeordnet. Damit kann erreicht werden, dass das Spritzgiesswerkzeug eine einfachere, zumindest in diesem Bereich Hinterschnitt freie Gestaltung aufweist. Die allfällig vorhandenen Sollbruchelemente können zudem so angeordnet sein, dass sie den Versatz überbrücken und sich ebenfalls in diese Entformungsrichtung erstrecken. Für einen guten Fluss des Kunststoffmaterials während des Spitzgussprozesses ist weiter von Vorteil, wenn die Sollbruchelemente um den jeweiligen Umfang der Spalte verteilt sind und von Spalt zu Spalt versetzt angeordnet sind.

### KURZE BESCHREIBUNG DER FIGUREN

Anhand der in den nachfolgenden Figuren gezeigten Ausführungsbeispiele und der dazugehörigen Beschreibung werden Aspekte der Erfindung näher erläutert. Es zeigen:
- Fig. 1: Eine erste Variante einer Installationsdose gemäss der Erfindung in einer perspektivischen Ansicht von unten;
- Fig. 2: die erste Variante der Installationsdose gemäss Figur 1 in einer perspek-tivischen und teilweise geschnittenen Ansicht von unten;
- Fig. 3: Eine zweite Variante einer Installationsdose gemäss der Erfindung in ei-ner perspektiven Ansicht von unten und einem ersten Detail des Wand-bereichs
- Fig. 4: Die zweite Variante der Installationsdose gemäss Figur 3 und einem zweiten Detail des Wandbereichs.

### BESCHREIBUNG DER AUSFÜHRUNGSFORMEN

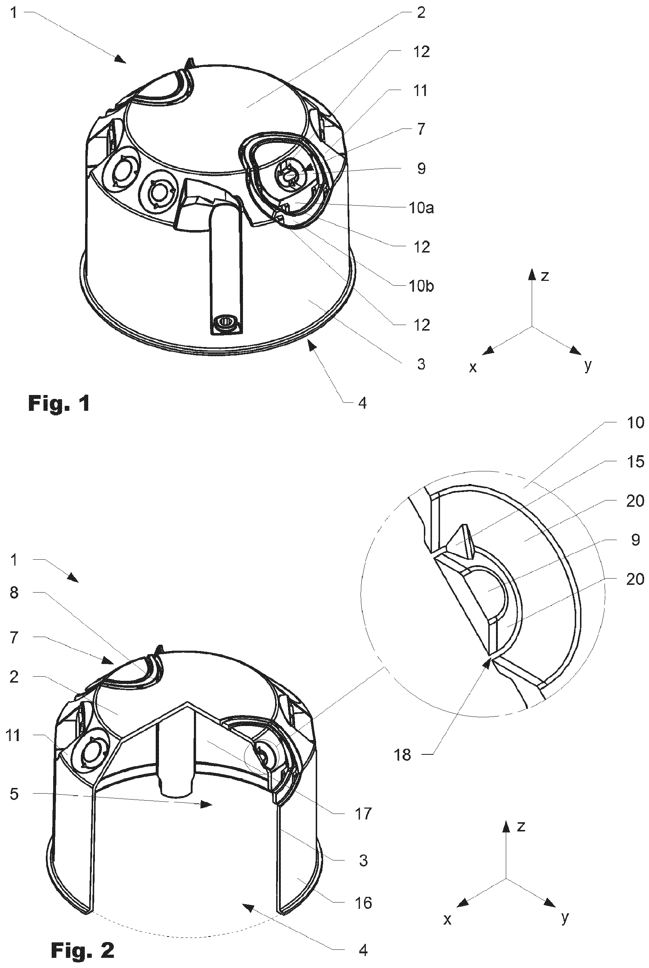

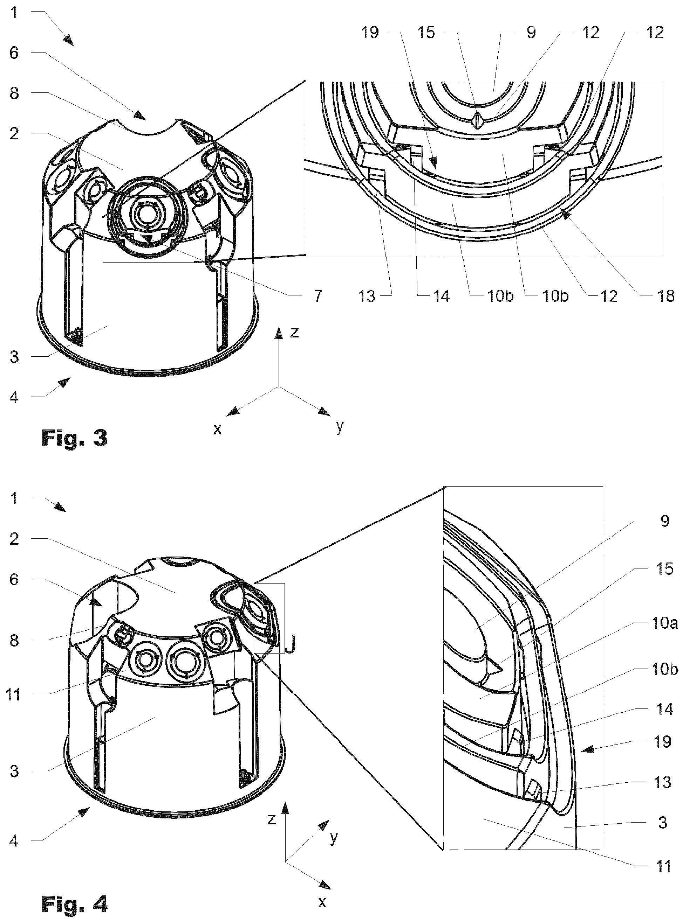

**Figur 1** bis **Figur 2** zeigen eine erste Variante einer erfindungsgemässen Installationsdose 1 und **Figur 3** bis **Figur 4** eine zweite Variante einer erfindungsgemässen Installationsdose 1 für elektrotechnische Zwecke. Die Installationsdose 1 umfasst einen Dosenboden 2 mit einer daran anschliessenden Dosenwand 3, welche einen Installationsraum 5 umgeben, der über eine dem Dosenboden 2 gegenüberliegende Installationsöffnung 4 zugänglich ist. Die Installationsdose 1 weist einen Übergangsbereich 11 auf, welcher zwischen dem Dosenboden 2 und der Dosenwand 3 ausgebildet ist.

Die Installationsdose 1 weist zwei einander diametral gegenüber angeordnete Einführöffnungen 6 zum Einführen von Elektrorohren und/oder Elektrokabeln in den Installationsraum 5 auf. Diese Einführöffnungen 6 erstrecken sich über den Dosenboden 2, den Übergangsbereich 11 und die Dosenwand 3.

Die Einführöffnung 6 ist vor der Installation durch einen heraustrennbaren Wandbereich 7 verschlossen. Der Wandbereich 7 ist gegenüber einem Rand 8 (vgl. **Figur 3** und **Figur 4**) der Einführöffnung 6 zumindest bereichsweise durch einen Spalt 12 getrennt, welcher mindestens ein äusseres Sollbruchelement 13 umfasst. Der Wandbereich 7 ist in den gezeigten Varianten weiter in eine innere Sektion 9 und zwei äussere Sektionen 10a, 10b unterteilt. Eine zweite äussere Sektion 10b ist hierbei um eine erste äussere Sektion 10a herum angeordnet. Die Sektionen 9, 10a sind untereinander von einem Spalt 12 getrennt, welcher mindestens ein inneres Sollbruchbruchelement 15 umfasst, während zwischen den Sektionen 10a und 10b und in dem dazugehörigen Spalt 12 mindestens ein mittleres Sollbruchbruchelement 14 angeordnet ist. Während die innere Sektion 9 kreis oder oval förmig ausgestaltet ist, sind die äusseren Sektionen 10a und 10b O-förmig. Andere Ausgestaltungen sind jedoch ebenfalls möglich. Ein Spalt 12 kann so gestaltet sein, dass dieser an einer Innen-und/ oder einer Aussenseite 17, 16 der Installationsdose 1 entlang des Spaltes 12 zumindest eine abgeflachte Seitenfläche 20 aufweist. Je nach Grundform der Dose und Anordnung der Einführöffnung 6, bzw. des Wandbereiches 7 auf der Installationsdose 1 können die jeweiligen Spalte 12 um die innere und die mindestens eine äussere Sektion 9, 10 in zwei Raumrichtungen gekrümmt angeordnet sein. In den gezeigten Varianten trifft dies für die beiden Spalte 12, welche die erste und die zweite äussere Sektion 10a, 10b umgeben, zu. Der Spalt 12, welcher die innere Sektion 9 umgibt, liegt auf dem Übergangsbereich 11.

Entlang der Spalte 12 kann jeweils eine Öffnung in den Installationsraum 6 geschaffen werden, die an den Durchmesser eines einzuführenden Rohres oder Kabels anpassbar ist. Das Heraustrennen der weiter innen liegenden Sektionen benötigt hierbei weniger Kraft als das Heraustrennen der weiter aussen liegenden Sektionen (ausgehende von einem Zentrum der Einführöffnung 6).

In den dargestellten Varianten ist der die innere und/oder die äusseren Sektionen 9, 10 umgebene Spalt 12 zumindest bereichsweise als ein Durchbruch 18 von einer Doseninnenseite 17 zu einer Dosenaussenseite 16 ausgestaltet. Zwischen den Durchbrüchen 18 eines jeweiligen Spaltes 12 verbleiben die multiplen Sollbruchelemente 13, 14, 15 in Form von den Durchbrüchen 18 überbrückender Stege. Die Anzahl der jeweiligen Stege 13, 14, 15 in einem Spalt 12 kann hierbei von Spalt zu Spalt von innen nach aussen zunehmen. In den gezeigten Varianten ist die Anzahl der inneren Sollbruchelemente 15 des Spalts 12 um die innere Sektion 9 kleiner als die Anzahl von mittleren Sollbruchelementen 14 des Spalts 12 um die erste äussere Sektion 10a. Allerdings sind die äusseren Sollbruchelemente 13, welche die zweite äussere Sektion 10b umgeben, in der Anzahl geringer als die mittleren Sollbruchelemente 14, welche die erste äussere Sektion 10a umgeben. Dennoch wird eine grössere Kraft benötigt um die äussere Sektion 10b herauszutrennen, da die äusseren Sollbruchelemente 13, welche die zweite äussere Sektion 10b umgeben stärker dimensioniert sind als die mittleren Sollbruchelemente 14, welche die erste äussere Sektion 10a umgeben.

Wie in der **Figur 2** ersichtlich, ist die innere Sektion 9 bezogen auf die Aussenseite 16 der Installationsdose 1 versenkt angeordnet und besitzt unabhängig davon in Relation zu den beiden äusseren Sektionen 10a, 10b eine verhältnismässig kleine Fläche von A = 5 - 15% der gesamten Fläche der äusseren Sektionen 10a, 10b. Diese beiden Faktoren erleichtern weiter das Heraustrennen der inneren Sektion 9.

Die erste und die zweite Variante der erfindungsgemässen Installationsdose 1 können durch Spritzguss hergestellt werden. Hierzu können beide Varianten, wie folgt dargestellt, verschiedene vorteilhafte konstruktive Eigenschaften aufweisen. Wie in den Detailansichten von **Figur 3** und **Figur 4** ersichtlich, erstrecken sich die Durchbrüche 18 der jeweiligen Spalte 12 in eine Entformungsrichtung (negative z-Richtung) durch die Installationsdose 1. Weiterhin sind die erste und die zweite äussere Sektion 10a und 10b zumindest bereichsweise auf der Dosenwand 4 angeordnet und diese Bereiche 19 von den Durchbrüchen 18 getrennt und senkrecht zur Entformungsrichtung zum Installationsraum 6 hin gestaffelt angeordnet (vgl. **Figur 3**). Die Stege, bzw. Sollbruchelemente 13, 14, welche zwischen den gestaffelten Bereichen 19 angeordnet sind, erstrecken sich ebenfalls in die Entformungsrichtung.

Die gezeigte zweite Variante unterscheidet sich von der ersten Variante der Installationsdose 1 in einer anderen Grundform der Installationsdose 1 sowie in der Form und Ausgestaltung der inneren Sektion 9. Bei der ersten Variante hat die innere Sektion 9 eine längliche Form, welche zum Einführen eines Datenkabels gedacht ist während in der zweiten Variante die innere Sektion kreisförmig ausgestaltet ist. Grundsätzlich eignen sich jedoch beide Formen der ersten und zweiten Variante für das Einführen eines Werkzeuges wie beispielsweise eines Schraubendrehers. Das eingeführte Werkzeug kann dahingehend genutzt werden, dass die um die innere Sektion herumliegenden äusseren Sektionen durch entsprechendes Heraushebeln mit dem Werkzeug einfacher herausgetrennt werden können. Zum Hebeln wird das Werkzeug durch die von der inneren Sektion 9 freigegebenen Öffnung in den Installationsraum 5 gesteckt und das Werkzeug an einem Ende an der jeweiligen herauszutrennende Sektion 10a, 10b abgestützt.

**LISTE DER BEZUGSZEICHEN**

| | | | |
|---|---|---|---|
| 1 | Installationsdose | 13 | Äusseres Sollbruchele-ment (Steg) |
| 2 | Dosenboden | | |
| 3 | Dosenwand | 14 | Mittleres Sollbruchele-ment (Steg) |
| 4 | Installationsöffnung | | |
| 5 | Installationsraum | 15 | Inneres Sollbruchelement (Steg) |
| 6 | Einführöffnung | | |
| 7 | Wandbereich | 16 | Aussenseite (Dose) |
| 8 | Rand | 17 | Innenseite (Dose) |
| 9 | Innere Sektion | 18 | Durchbruch |
| 10 | Äussere Sektion | 19 | Gestaffelter Bereich |
| | a. Erste äussere Sektion | 20 | Abgeflachte Seitenfläche |
| | b. Zweite äussere Sektion | | |
| 11 | Übergangsbereich | | |
| 12 | Spalt | | |

## Patentansprüche

1. Installationsdose (1) für elektrotechnische Zwecke umfassend
a. einen Dosenboden (2) und eine daran anschliessende Dosenwand (3), welche einen Installationsraum (5) bilden, sowie
b. eine dem Dosenboden (2) gegenüberliegende und von der Dosenwand (3) umgebende Installationsöffnung (4), wobei
c. die Installationsdose (1) einen abgerundeten und/oder abgeflachten Übergangsbereich (11) zwischen dem Dosenboden (2) und der Dosenwand (3) umfasst, und
d. die Installationsdose (1) im Bereich des Dosenbodens (2) und der Dosenwand (3) und dem Übergangsbereich (11) weiterhin mindestens eine Einführöffnung (6) aufweist, welche von einem heraustrennbaren Wandbereich (7) verschlossen ist, wobei
i. der Wandbereich (7) gegenüber einem Rand (8) der Einführöffnung (6) zumindest bereichsweise durch einen Spalt (12) getrennt ist, der mindestens ein Sollbruchelement (13) umfasst;
ii. wobei der Wandbereich (7) eine innere Sektion (9) und mindestens eine diese zumindest teilweise umgebende äussere Sektion (10) umfasst, welche zumindest bereichsweise von der inneren Sektion (9) durch einen Spalt (12) getrennt ist, der ebenfalls mindestens ein Sollbruchelement (14, 15) umfasst, so dass je nach Durchmesser eines einzuführenden Rohres, die innere Sektion (9) alleine oder in Kombination mit der mindestens einen äusseren Sektion (10) heraustrennbar ist; und
e. der die innere und die äussere Sektion umgebene Spalt (12) zumindest bereichsweise als ein Durchbruch (18) von einer Doseninnenseite (17) zu einer Dosenaussenseite (16) ausgestaltet ist; und
f. die Installationsdose (1) durch Spritzguss hergestellt ist und die Durchbrüche (18) sich in eine Entformungsrichtung durch die Installationsdose (1) erstrecken.

2. Installationsdose (1) gemäss Patentanspruch 1, **dadurch gekennzeichnet, dass** die mindestens einen Sollbruchelemente (13, 14, 15), welche in Bezug auf ein Zentrum der Einführöffnung (6) in einem weiter innen liegenden Spalt (12) angeordnet sind, weniger stark dimensioniert sind.

3. Installationsdose (1) gemäss einem der vorangehenden Patentansprüche, **dadurch gekennzeichnet, dass** die mindestens eine äussere Sektion (10) aus mehreren äusseren Sektionen (10a, 10b) besteht.

4. Installationsdose (1) gemäss einem der vorangehenden Patentansprüche, **dadurch gekennzeichnet, dass** das mindestens eine Sollbruchelement (13, 14, 15) ein den Durchbruch (18) überbrückender Steg ist.

5. Installationsdose (1) gemäss Patentanspruch 4, **dadurch gekennzeichnet, dass** eine Anzahl der Stege (15) des Spalts (12) um die innere Sektion (9) kleiner ist als eine Anzahl von Stegen (13, 14) des Spalts (12) um die mindestens eine äussere Sektion (10).

6. Installationsdose (1) gemäss einem der vorangehenden Patentansprüche, **dadurch gekennzeichnet, dass** die innere Sektion (9) bezogen auf eine Aussenseite (16) der Installationsdose (1) versenkt angeordnet ist.

7. Installationsdose (1) gemäss einem der vorangehenden Patentansprüche, **dadurch gekennzeichnet, dass** die innere Sektion (9) eine Fläche von A=5-15% der Fläche der mindestens einen äusseren Sektion (10) einnimmt.

8. Installationsdose (1) gemäss einem der vorangehenden Patentansprüche, **dadurch gekennzeichnet, dass** die innere und/oder die mindestens eine äussere Sektion (9,10) zumindest bereichsweise auf der Dosenwand (3) angeordnet und diese auf der Dosenwand (3) angeordneten Bereiche (19) von den Durchbrüchen (18) getrennt und senkrecht zur Entformungsrichtung zum Installationsraum (5) hin gestaffelt angeordnet sind.

9. Installationsdose (1) gemäss Patentanspruch 8, **dadurch gekennzeichnet, dass** die Stege (13, 14, 15) angeordnet an der Dosenwand (3) sich in die Entformungsrichtung erstrecken.

10. Installationsdose (1) gemäss einem der vorangehenden Patenansprüchen, **dadurch gekennzeichnet, dass** mehrere Sollbruchelemente (13, 14, 15) um einen jeweiligen Umfang des Spaltes (12) verteilt sind und die Sollbruchelemente (13, 14, 15) eines Spaltes (12) zu den Sollbruchelementen (13, 14, 15) eines anderen Spaltes (12) versetzt angeordnet sind.

11. Installationsdose (1) gemäss einem der vorangehenden Patenansprüchen, **dadurch gekennzeichnet, dass** die innere und die mindestens eine äussere Sektion (9, 10) O-förmig und/oder U-förmig ausgestaltet sind.

12. Installationsdose (1) gemäss einem der vorangehenden Patenansprüchen, **dadurch gekennzeichnet, dass** die jeweiligen Spalte (12) um die innere und die mindestens eine äussere Sektion (9, 10) in zwei Raumrichtungen gekrümmt angeordnet sind.

13. Installationsdose (1) gemäss einem der vorangehenden Patenansprüchen, **dadurch gekennzeichnet, dass** die innere Sektion (9) in einem herausgetrennten Zustand eine Eingriffskontur für ein Werkzeug freigibt, insbesondere die Klinge eines Schraubendrehers, zum Ausbrechen des Wandbereiches (7).

14. Installationsdose (1) gemäss einem der vorangehenden Patenansprüchen, **dadurch gekennzeichnet, dass** die Installationsdose (1) einen Übergangsbereich (11) zwischen dem Dosenboden (2) und/oder der Dosenwand (3) aufweist.

## Claims

1. Installation box (1) for electrotechnical purposes comprising
a. a box base (2) and a box wall (3) adjacent thereto, which form an installation space (5), and
b. an installation opening (4) which is arranged opposite the box base (2) and which is surrounded by the box wall (3), wherein
c. the installation box (1) comprises a rounded and/or flattened transition region (11) between the box base (2) and the box wall (3), and
d. the installation box (1) furthermore has, in the region of the box base (2) and the box wall (3) and the transition region (11), at least one insertion opening (6) which is closed by a removable wall region (7), wherein
i. the wall region (7) is separated in relation to an edge (8) of the insertion opening (6) at least in certain regions by a gap (12), which comprises at least one predetermined breaking element (13);
ii. wherein the wall region (7) comprises an inner section (9) and at least one outer section (10) which at least partially surrounds said inner section and which is separated from the inner section (9) at least in certain regions by a gap (12),which likewise comprises at least one predetermined breaking element (14, 15), such that, depending on the diameter of a pipe to be inserted, the inner section (9) can be separated on its own or in combination with the at least one outer section (10); and
e. the gap (12) surrounding the inner and/or the outer section is designed at least in certain regions as a breakthrough (18) from a box inner side (17) to a box outer side (16); and
f. the installation box (1) is produced by injection moulding and the breakthroughs (18) extend in a demoulding direction through the installation box (1).

2. Installation box (1) according to Patent Claim 1, **characterized in that** the at least one predetermined breaking elements (13, 14, 15), which are arranged in a gap (12) which lies further towards the inside in relation to a centre of the insertion opening (6), are dimensioned in a less pronounced manner.

3. Installation box (1) according to either of the preceding patent claims, **characterized in that** the at least one outer section (10) is composed of a plurality of outer sections (10a, 10b).

4. Installation box (1) according to one of the preceding patent claims, **characterized in that** the at least one predetermined breaking element (13, 14, 15) is a web which spans the breakthrough (18).

5. Installation box (1) according to Patent Claim 4, **characterized in that** a number of the webs (15) of the gap (12) around the inner section (9) is smaller than a number of webs (13, 14) of the gap (12) around the at least one outer section (10).

6. Installation box (1) according to one of the preceding patent claims, **characterized in that** the inner section (9) is arranged in a sunken manner in relation to an outer side (16) of the installation box (1).

7. Installation box (1) according to one of the preceding patent claims, **characterized in that** the inner section (9) occupies an area of A=5-1 5% of the area of the at least one outer section (10).

8. Installation box (1) according to one of the preceding patent claims, **characterized in that** the inner and/or the at least one outer section (9, 10) are/is arranged at least in certain regions on the box wall (3) and these regions (19) arranged on the box wall (3) are separated from the breakthroughs (18) and arranged in a staggered manner perpendicular to the demoulding direction towards the installation space (5).

9. Installation box (1) according to Patent Claim 8, **characterized in that** the webs (13, 14, 15) arranged on the box wall (3) extend in the demoulding direction.

10. Installation box (1) according to one of the preceding patent claims, **characterized in that** a plurality of predetermined breaking elements (13, 14, 15) are distributed around a respective periphery of the gap (12) and the predetermined breaking elements (13, 14, 15) of one gap (12) are arranged so as to be offset with respect to the predetermined breaking elements (13, 14, 15) of another gap (12).

11. Installation box (1) according to one of the preceding patent claims, **characterized in that** the inner and the at least one outer section (9, 10) are of O-shaped and/or U-shaped design.

12. Installation box (1) according to one of the preceding patent claims, **characterized in that** the respective gaps (12) around the inner and the at least one outer section (9, 10) are arranged so as to be curved in two spatial directions.

13. Installation box (1) according to one of the preceding patent claims, **characterized in that** the inner section (9), in a separated state, opens up an engagement contour for a tool, in particular the blade of a screwdriver, for breaking off the wall region (7).

14. Installation box (1) according to one of the preceding patent claims, **characterized in that** the installation box (1) has a transition region (11) between the box base (2) and/or the box wall (3).

## Revendications

1. Boîte d'installation (1) pour les fins électrotechniques, ladite boîte comprenant
a. un fond de boîte (2) et une paroi de boîte (3) attenante qui forment un espace d'installation (5), ainsi que
b. une ouverture d'installation (4) située à l'opposé du fond de boîte (2) et entourée par la paroi de boîte (3),
c. la boîte d'installation (1) comprenant une zone de transition arrondie et/ou aplatie (11) entre le fond de boîte (2) et la paroi de boîte (3), et
d. la boîte d'installation (1) comportant en outre dans la zone du fond de boîte (2) et de la paroi de boîte (3) et dans la zone de transition (11) au moins une ouverture d'insertion (6) qui est fermée par une zone de paroi (7) qui peut être séparée,
i. la zone de paroi (7) étant séparée au moins par portions d'un bord (8) de l'ouverture d'insertion (6) par le biais d'un intervalle (12) qui comprend au moins un élément de rupture prédéterminé (13) ;
ii. la zone de paroi (7) comprenant une section intérieure (9) et au moins une section extérieure (10) qui entoure celle-ci au moins partiellement et qui est séparée au moins par portions de la section intérieure (9) par un intervalle (12) qui comprend également au moins un élément de rupture prédéterminé (14, 15) de sorte que la section intérieure (9) puisse être séparée seule ou en combinaison avec l'au moins une section extérieure (10) en fonction du diamètre d'un tube à insérer ; et
e. l'intervalle (12) entourant la section intérieure et/ou la section extérieure est conçu au moins par portions comme un ouverture (18) allant d'un côté de boîte intérieur (17) à un côté de boîte extérieur (16); et
f. la boîte d'installation (1) est réalisée par moulage par injection et les ouvertures (18) s'étendent dans un sens de démoulage à travers la boîte d'installation (1).

2. Boîte d'installation (1) selon la revendication 1, **caractérisée en ce que** l'au moins un élément de rupture prédéterminé (13, 14, 15), qui est disposé dans un intervalle (12) situé plus à l'intérieur par rapport à un centre de l'ouverture d'insertion (6), est moins fortement dimensionné.

3. Boîte d'installation (1) selon l'une des revendications précédentes, **caractérisée en ce que** l'au moins une section extérieure (10) comprend une pluralité de sections extérieures (10a, 10b).

4. Boîte d'installation (1) selon l'une des revendications précédentes, **caractérisée en ce que** l'au moins un élément de rupture prédéterminé (13, 14, 15) est une nervure pontant l'ouverture (18).

5. Boîte d'installation (1) selon la revendication 4, **caractérisée en ce que** le nombre de traverses (15) de l'intervalle (12) autour de la section intérieure (9) est inférieur à un nombre de traverses (13, 14) de l'intervalle (12) autour de l'au moins une section extérieure (10).

6. Boîte d'installation (1) selon l'une des revendications précédentes, **caractérisée en ce que** la section intérieure (9) est disposée en creux par rapport à un côté extérieur (16) de la boîte d'installation (1).

7. Boîte d'installation (1) selon l'une des revendications précédentes, **caractérisée en ce que** la section intérieure (9) occupe une surface de A = 5 à 15 % de la surface de l'au moins une section extérieure (10).

8. Boîte d'installation (1) selon l'une des revendications précédentes, **caractérisée en ce que** la section intérieure et/ou l'au moins une section extérieure (9, 10) sont disposées au moins par portions sur la paroi de boîte (3) et ces zones (19), disposées sur la paroi de boîte (3), sont séparées par des ouvertures (18) et sont disposées en quinconce perpendiculairement au sens de démoulage en direction de l'espace d'installation (5).

9. Boîte d'installation (1) selon la revendication 8, **caractérisée en ce que** les traverses (13, 14, 15) disposées sur la paroi de boîte (3) s'étendent dans le sens de démoulage.

10. Boîte d'installation (1) selon l'une des revendications précédentes, **caractérisée en ce qu'**une pluralité d'éléments de rupture prédéterminé (13, 14, 15) sont répartis sur une circonférence respective de l'intervalle (12) et les éléments de rupture prédéterminé (13, 14, 15) d'un intervalle (12) sont disposés de manière décalée par rapport aux éléments de rupture prédéterminé (13, 14, 15) d'un autre intervalle (12).

11. Boîte d'installation (1) selon l'une des revendications précédentes, **caractérisée en ce que** la section intérieure et l'au moins une section extérieure (9, 10) sont en forme de O et/ou en forme de U.

12. Boîte d'installation (1) selon l'une des revendications précédentes, **caractérisée en ce que** les intervalles respectifs (12) autour de la section intérieure et de l'au moins une section extérieure (9, 10) sont disposés de manière incurvée dans deux directions de l'espace.

13. Boîte d'installation (1) selon l'une des revendications précédentes, **caractérisée en ce que**, à l'état séparé, la section intérieure (9) libère un contour d'engagement destiné à un outil, notamment la lame d'un tournevis, pour éclater la zone de paroi (7).

14. Boîte d'installation (1) selon l'une des revendications précédentes, **caractérisée en ce que** la boîte d'installation (1) comporte une zone de transition (11) entre le fond de boîte (2) et/ou la paroi de boîte (3).
